# EUROPEAN PATENT APPLICATION

(11) **EP 2 626 691 A1**
(43) Date of publication of application: **14.08.2013**
(21) Application number: 12154545.3
(22) Date of filing: 08.02.2012
(51) Int. Cl.: G01N 21/55

(54) **Surface Wave Sensing**

(71) Applicant: Stichting IMEC Nederland, 5656 AE Eindhoven (NL); Amolf, 1098 XG Amsterdam (NL); Philips Research, 5656 AE Eindhoven (NL)
(72) Inventor: Arnold, Christophe, 78120 Rambouillet (FR); Gomez Rivas, Jaime, 5644 DT Eindhoven (NL); Offermans, Peter, 5611 SZ Eindhoven (NL); Crego Calama, Mercedes, 5663 PK Geldrop-Mierlo (NL)
(74) Representative: Krebs, Achim

(57) **Abstract**

This application describes methods and apparatus for chemical sensing using surface wave resonance, such as surface plasmon resonance (SPR). A sensor is described having at least one layer (102, 103) of a metallic or lossy dielectric material configured to support surface waves. At least two sensing layers (104, 105, 106, 107) are provided, each adjacent a different surface of a metallic/lossy dielectric layer, with the lossy dielectric and sensing layers arranged in a multilayer stack in a direction substantially perpendicular to the layers. Advantageously there are at least two dielectric/lossy dielectric layers (102, 103) and at least some of the sensing layers are sensitive to different target chemicals. By analysing any detected change in resonance the relevant interface leading to such change can be identified and hence multi-analyte sensing capability is provided in the multi-layer sensor.

## Description

This invention relates to methods and apparatus for chemical sensing, including biochemical sensing and gas sensing, and especially to chemical sensing using surface waves, such as surface plasmon resonance.

Sensors based on surface waves are known for detecting the adsorption of material onto a sensing surface, for instance for chemical sensing such as gas sensing and/or biochemical testing.

An extended surface wave sensing technique is based on surface plasmon resonance (SPR) which involves the excitation of surface plasmon polaritons (SPP), typically by incident light. Surface plasmon polaritons (SPP) are electromagnetic waves which propagate along the interface between two media with dielectric constants of opposite sign, e.g. a metal and a dielectric. They originate from the interaction between the electromagnetic field and surface charge density oscillations. Typically a surface plasmon resonance (SPR) is observed by measuring the reflectivity of p-polarized light of fixed wavelength at a metal-dielectric interface as the angle of incidence is varied. The principle of chemical sensing using SPR involves placing a thin layer of chemically active material on the metal surface along which the plasmon propagates. Changes in this layer brought about by the presence of the analyte will result in changes in the SPR which are monitored to allow a determination of analyte concentration.

A basic SPR sensor typically comprises a single metallic thin film layer and a prism for coupling light to the metal layer. A typical experimentally obtainable resolution of the refractive index using this method is 2x10⁻⁶. Higher sensitivities can be obtained by using long-range surface plasmon polariton (LRSPP) resonance. This resonance appears when two SPP supported by each interface of a metallic thin film are coupled to each other. This coupling gives rise to narrower resonance, which increases the sensitivity. LRSPP resonance can be excited using the same basic sensor configuration, with the addition of a layer between the prism and the metallic thin film that has the same refractive index as the sensed solution in order to ensure efficient coupling of the SPPs at the two interfaces. Patent application US2010/0128273 describes an alternative sensor configuration in which a prism is used with a stack comprising two metal layers separated by a dielectric layer to detected changes in an analyte at the outer interface of the outer metal layer.

Various SPR sensor arrangements have also been proposed to provide multiple sensing channels that may be interrogated simultaneously. This provides the possibility of using a reference channel and/or sensing for different chemicals.

For example Homola et el. "Multi-analyte surface plasmon resonance biosensing" Methods 37 (2005) 26-36 describes SPR imaging and SPR spectroscopy with parallel or serial channel architectures.

SPR imaging is an intensity modulation-based technique in which a collimated beam of monochromatic light passes through a prism coupler and excites SPPs on a thin metal layer. The spatial distribution of the refractive index at the metal surface can be determined by measuring the distribution of light intensity across the reflected beam by means of a two-dimensional detector array. SPR imaging systems typically use a fixed angle of incidence and measure intensity changes and do not typically offer as good sensitivity as spectroscopy based sensors. Also SPR imaging systems require a two-dimensional detector array which adds to the cost and complexity of the sensor.

Parallel channel SPR sensors based on spectroscopy rely on exciting SPPs in different parallel sensing channels and interrogating their reflectivity spectra independently to determine SPR changes in each channel. The use of parallel sensing channels can require illuminating relatively large areas and the incident light may need to be split into multiple beams, requiring additional optical components. Kim et al. "A Novel Surface Plasmon Resonance Multisensing Multichannels" Solid-State Sensors, Actuators and Microsystems Conference, Transducers 05, Vol. 2, pp 1800-1803 describes a parallel channel architecture with multichannel layers with different thicknesses to provide wavelength separation.

In serial channel SPR sensors the SPR spectra from multiple channels are encoded in different wavelength regions of a single polychromatic light beam (wavelength division multiplexing). This may be accomplished by changing the angle of incidence of the incident light beam at the various channels or by using a dielectric overlayer deposited over a part of the SPR-active surface. Consequently, the wavelength spectrum of the transmitted light exhibits two SPR dips corresponding to SPRs in two distinct areas of the metal film. These areas form two independent sensing channels. The response of each channel is encoded into a shift in the position of respective SPR dip.

Serial channel SPR sensors rely on the spatial patterning of a sensing layer at the exact positions determined by the angle of incidence and the prism properties. The spatial extent of the sensing regions should be large enough to support the changing angle of incidence, which again requires a relatively large surface area.

Also surface wave sensing is possible with thin layers of (lossy) dielectrics as guiding medium by means of the fundamental guided modes in weakly or non-absorbing dielectrics, or the so-called long-range surface polaritons in strongly absorbing dielectrics.

It is an object of the present invention to provide methods and apparatus of chemical sensing using surface waves than at least mitigate some of the aforementioned disadvantages.

Thus according to the present invention there is provided a surface wave sensor apparatus comprising: at least one layer of a metallic or lossy dielectric material configured to support surface waves; a first sensing layer adjacent a first surface of said at least one layer of metallic or lossy dielectric material, the sensing layer being sensitive to one or more target chemicals so as to undergo a change in physical properties in the presence of said one or more target chemicals, wherein the apparatus comprises at least one sensing layer adjacent a different surface of said at least one layer of metallic or lossy dielectric material wherein said sensing layers and said at least one layer of metallic or lossy dielectric material are arranged in a multilayer stack in a direction substantially perpendicular to said layers.

The sensor according to this aspect of the invention thus comprises a multilayer stack having at least two functional sensing surfaces at different depths, but overlapping locations, within the stack. Thus a first sensing layer is adjacent a first surface of a metallic or lossy dielectric material and at least one additional sensing layer is adjacent a second, different surface of a metallic or lossy material. Changes in any of the sensing layers will result in a change in the surface resonance which can be detected, for example SPR or guided mode resonance.

As the sensing layers are arranged in a multilayer stack no additional surface area is required and changes in all the sensing layers can be monitored using a single beam of incident radiation and a single detector. The multiple sensing layers may be used to improve the sensitivity of the sensor and/or provide multi-analyte detection, as will be described further below.

The first sensing layer may be adjacent one surface of a first layer of metallic or lossy dielectric material and an additional layer of sensing material may be adjacent the opposite surface of the first layer of metallic or lossy dielectric material. In other words a sensing layer may be adjacent to each surface of one layer of metallic or lossy dielectric material.

In one embodiment therefore there may only be a single layer of metallic or lossy dielectric material with both (major) surfaces of the layer being adjacent sensing layers. Such an arrangement would generally lead to one surface resonance in the measured spectrum.

In another embodiment however the multilayer stack comprises a plurality of layers of metallic or lossy dielectric material configured to support surface waves. Thus there may be at least two layers of metallic or lossy dielectric material. The presence of say, two metal layers configured to support surface waves, will lead to two separate surface resonances in the measured spectrum, one for each layer. These surface resonances can be arranged to be at a maximum for different angles and thus will be distinct in measured spectrum.

The sensing layers may then be arranged such that the first sensing layer is adjacent one surface of a first layer of metallic or lossy dielectric material and a second, additional layer of sensing material is adjacent one surface of a second layer of metallic or lossy dielectric material, i.e. a different layer. With this arrangement any changes in the first sensing layer will strongly affect the surface resonance from the first metallic or lossy dielectric layer and any changes in the second sensing layer, adjacent the second metallic/lossy dielectric layer, will strongly affect the resonance from that layer. Thus identifying a change in the resonance due to the first metallic layer will indicate that it is the first sensing layer which is undergoing changes, i.e. the first sensing layer is reacting to the presence of the relevant target chemical.

It is therefore possible to discriminate a variation which is caused by a sensing layer adjacent one metallic/dielectric layer from a variation caused by a different sensing layer adjacent a different metallic/dielectric layer. This means that each sensing layer can be arranged to respond to a different target chemical to provide multi-analyte capability.

Also, it has been found that the response from two sensing layers adjacent one metallic/dielectric layer can be discriminated by looking at the effect on surface resonance due to other metallic/lossy dielectric layers. For example, consider a multilayer structure comprising two metal layers, a top metal layer and a bottom metal layer with a small gap between them and two sensing layers adjacent the two surfaces of the top metal layer. Changes to either sensing layer may have a strong impact on the resonance of the top metal layer. However changes to the sensing layer on the lower side of the top metal layer, i.e. the sensing layer which is between the top and bottom layers, can have a lesser effect on the resonance (e.g. SPR) of the lower metal layer. Changes to the sensing layer on the top surface of the top layer may have no substantial effect (or a much lesser effect again) on the resonance (e.g. SPR) of the lower metal layer. Thus by looking at the effect on the resonance due to the lower metal layer it will be possible to determine which sensing layer caused the variation.

At least two layers of metallic or lossy dielectric material may therefore be arranged with sensing layers adjacent both their top and bottom surfaces in the multilayer stack.

As mentioned above the ability to determine which sensing layer is causing a variation in resonance means that at least some of the sensing layers may be sensitive to different target chemicals to provide multi-analyte detection. However the multiple sensing layers may also be used to provide increased sensitivity and thus at least some of the sensing layers may be sensitive to the same target chemicals as one another.

It will be therefore appreciated that each surface of a plurality of metallic or lossy dielectric layers could then be provided with sensing surfaces. Any variation in the surface resonance can then be used to determine the sensing layer causing the variation. The relevant layer can be identified by looking for a strong variation in resonance due to that layer and the relevant surface of that layer can be identified by looking at to whether there is also an effect on the resonance corresponding to a neighbouring metallic/lossy dielectric layer.

It will be appreciated that in order to provide sensing capability the sensing layer must be able to detect the target chemicals. In one embodiment the multilayer stack may comprise at least one layer of porous material between layers of metallic or lossy dielectric material. The porous material may allow a flow path for a fluid, e.g. a gas or liquid, to be tested. Various porous materials may be used.

The multilayer stack may be configured such that, in use, the plurality of layers of metallic or lossy dielectric material are separated by layers of liquid. The liquid may be a solution under test and may be flowed between the layers of metallic or lossy dielectric material.

As with known SPR sensors an optical coupler may be used for coupling light incident on the multilayer stack into surface modes in the at least one layer of metallic or lossy dielectric material. The optical coupler may be a refractive element, such a prism, or a diffractive element, such as a grating.

The invention also relates to a method of chemical sensing. Thus in another aspect of the invention there is provided a method of chemical sensing comprising: taking a multilayer stack comprising, in a direction perpendicular to said stack, at least one layer of metallic or lossy dielectric material, a first sensing layer adjacent a first surface of a layer of metallic or lossy dielectric material and at least one additional sensing layer adjacent a different surface of a layer of metallic or lossy dielectric material, illuminating said multilayer stack with light to induce surface waves in said at least one layer of metallic or lossy dielectric material; and monitoring light reflected from said multilayer stack to detect the presence of said target chemicals.

The method of this aspect of the invention offers all of the same advantages and all of the same benefits as described above with respect to the first aspect of the invention.

As mentioned above the multilayer stack may comprise at least two layers of metallic or lossy dielectric material. The method may then involve monitoring the surface resonance for each of said at least two metallic or lossy dielectric layers to detect any variation. The method may also comprise analysing any variation in surface resonance for each of said at least two metallic or lossy dielectric layers to identify which sensing layer is causing said variation.

The invention will now be described by way of example only with respect to the following drawings; of which:
Figure 1 shows a chemical sensor according to a first aspect of the invention;
Figure 2 illustrates the response in surface wave resonance due to the various sensing layers;
Figure 3 illustrates a further embodiment of the invention.

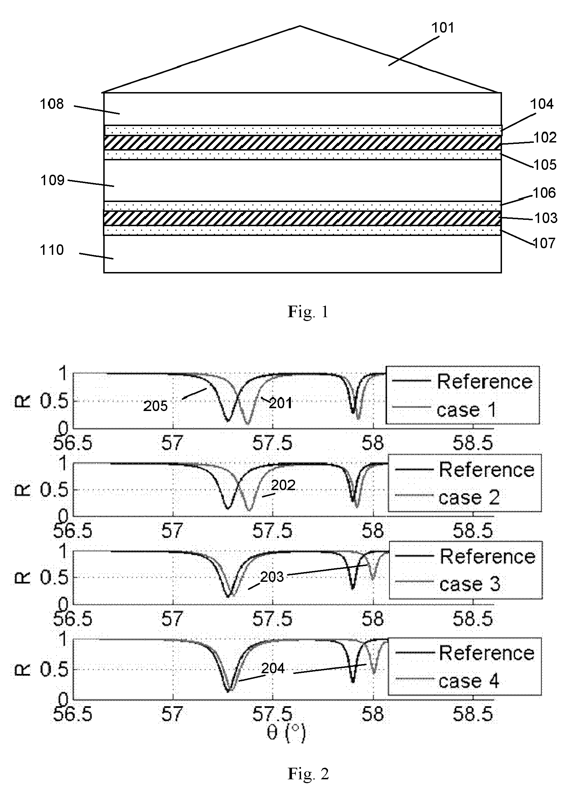

Figure 1 illustrates a chemical sensor according to an embodiment of the invention. The sensor may be used as a gas sensor, for instance in electronic nose type applications, and/or as a biosensor, for instance in a lab-on-a-chip type sensor.

The sensor comprises a multilayer stack of several overlapping layers in which several thin films separated by active layers support guided modes, i.e. surface modes. The sensor shown in Figure 1 has a prism 101 for coupling light to the multilayer stack as is known in SPR sensing. The multilayer stack also comprises a first layer 102 of a material able to support surface modes. Layer 102 may be a metallic material, for instance gold, but also lossy dielectric materials may be used. The use of dielectric films can reduce cost compared to the use of metal films.

The lossy dielectric can be a material weakly absorbing in which ε"<<ε", i.e. with a complex permittivity with an imaginary component ε" much smaller than its real component. The lossy dielectric can be also a strongly absorbing material, i.e., ε"≧ε'.

The sensor also comprises a second layer 103 of metallic or lossy dielectric material. The material and the thickness of this second layer may typically be the same as that of layer 102 but this need no necessarily be the case.

A first sensing layer 104 is adjacent the top surface of the first metallic/lossy dielectric layer 102. The sensing layer is sensitive to one or more target chemicals to undergo a change in properties in the presence the target chemicals. For instance the target chemicals may be absorbed by or bind to the sensing layer 104.

A second sensing layer 105 is disposed adjacent the lower surface of first metallic/lossy dielectric layer 102. This second sensing layer may be sensitive to the same target chemicals as the first sensing layer 104, to improve sensitivity but in some embodiments sensing layer 105 may respond to different target chemicals than sensing layer 104 to provide multi-analyte capability.

Third and fourth sensing layers, 106 and 107 are provided adjacent the top and bottom surfaces respectively of second metallic/lossy dielectric layer 103. Again each of the third and fourth sensing layers may be arranged to respond to the same target chemicals as one of the other sensing layers or different target chemicals to the other sensing layers. The skilled person will be well aware of various materials that could be used as the sensing layers. Sensing layers can be, for example, antibodies, enzymes, proteins, DNA, molecular complexes, polymers, polyelectrolytes, etc.

The metallic/lossy dielectric thin films 102 and 103, together with the sensing layers, are arranged between spacer layers 108, and 109 and optionally 110. These spacer layers provide separation of the metallic/lossy dielectric layers and also allow the substance to be monitored to reach the relevant sensing layers.

Conveniently spacer layers 108, 109 and 110 may comprise a porous material, i.e. a material which is porous to the substance to be monitored, i.e. gas porous for a gas sensor. Use of porous material means that a physical layer can be deposited during device fabrication and the layer provides support and stability to the sensor. Suitable porous materials may include nanoparticle compositions or the like. Examples of interconnected porous materials are layers or matrices (for example polymer matrices) containing: nanoparticles; colloids; crystals; zeolites; fibers; carbon nanotubes; and/or nanocomposites, for example, nanocrystalline sillica layers.

However the spacer layers may comprise an air gap with the metallic layers being held in spaced relation by a support structure (not shown) such as supporting side walls. Such a structure could be fabricated by depositing sacrificial material during device fabrication which is then removed to leave free standing metallic/lossy dielectric layers with the sensing layers. A fluid flow path between the metallic/lossy dielectric layers may be formed an in use a fluid flowed past the various sensing layers. The spacers layers, together with the sensing layers, can therefore be seen as active layers wherein the presence of the target chemicals will cause changes in the surface resonance, e.g. SPR, detected.

Figure 2 illustrates the reflectance as a function of the internal angle of the incident light on the multilayer structure such a shown in figure 2. The multilayer structure was an F2 glass prism / active layer (800nm) / gold (35nm) / active layer (1000nm) / gold (40nm) / active layer and the wavelength of illumination .

Figure 2 illustrates the reflectance calculated as a function of the internal angle of the incident light, when illuminated at 630nm, to a change in refractive index adjacent one of the sensing surfaces. Figure 2 shows four plots, in each case the reflectance was calculated for a refractive index variation of 0.005 in 200nm of the active layer adjacent a different one of the sensing surfaces. The top plot shows the variation 201 in response to a refractive index variation above the first gold layer, the second plot shows the variation 202 in response to a refractive index variation below the first gold layer, the third plot shows the variation 203 in response to a refractive index variation above the second gold layer and the bottom plot shows the variation 204 in response to a refractive index variation below the second gold layer.

In each plot a reference case 205 is also shown which would be the expected response with no refractive index variation.

It can be seen that the reflectance curve has two distinct dips in intensity due to the surface plasmon resonance in the two gold layers. The dip of reflectance at 57.3 degrees, correspond to a mode which has a field mainly confined on the first gold thin film, whereas the resonance at 57.8 degrees is associated to a mode mainly confined on the second gold thin film. These modes are comparable to long-range surface plasmon polaritons but slightly disturbed by the presence of the other metallic thin film.

It can also be seen that a refractive index variation at any of the sensing interfaces results in a detectable change in angle of the angle of the dips in intensity. It will also be seen however that both dips in intensity exhibit a change in angle but that the relative amount depends on the particular interface at which the refractive index variation occurs. Thus a refractive index variation above or below the second gold layer results in a relative large change in the angle for the resonance due to the second gold layer (i.e. the higher angle intensity dip). However there is also an effect on the resonance due to the first gold layer whose relative strength depends on which interface underwent the refractive index variation.

It will therefore be clear that the sensitivity of each resonance varies significantly depending on which interface is subjected to active layer refractive index variation. Therefore, by functionalizing differently the metallic interfaces to some specific analyte and by measuring the shift of the two resonances, it is possible to deduce which interface has captured the analyte, and so which type of analyte is present.

Thus the multilayer sensor according to embodiments of the present invention is advantageous in that the device does not need a large surface area as the sensing layers are stacked. Only the surface area of a single sensing channel is required. Also the sensor does not require an expensive imaging system. The sensor can be used with a prism, as illustrated in figure 1, but may also be used with gratings or other diffractive elements. The sensor does not sacrifice sensitivity for the multi-analyte sensing capability and can even improve sensitivity to a specific analyte by combining different sensing materials in one stack.

Although the example has been limited to three different active layers, this concept can be extended to more layers to achieve multianalyte sensitivities in compact devices. This approach can be applied to detect different gases, e.g., NO, NO2, CO2, by activating the different layers with organic molecules that selectively or non-selectively react with specific gases, for example, porphyrins, phthalocyanines, etc. In this way not only quantitative detection in the ppm to ppb range can be achieved but also selective detection.

The presence of multi resonance can also be used to increase the sensitivity of an LRSPP based sensor device by measuring the shift of several resonances due to the presence of one specific type of analyte.

Referring back to Figure 1 it will be appreciated that in some embodiments not all surfaces of the metallic/lossy dielectric film layers would be functionalized. For instance the device could be arranged to have a single flow path between the metallic/lossy dielectric layers and thus sensing layers 105 and 106 may be provided but sensing layers 104 and 107 may be omitted.

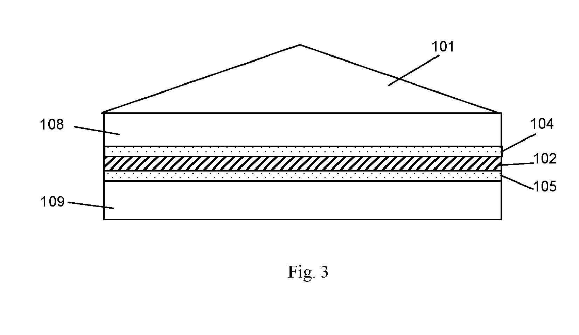

Whilst embodiments of the invention may advantageously comprise multiple metallic/lossy dielectric layers to provide sensing based on detecting the variation in resonances due to both layers it would be possible to have a sensor with only a single metal layer 102 such as shown in Figure 3, with both surfaces of this metal layer having sensing layers 104, 105. In this case it, as the reflectance spectrum would include a single intensity dip only it would not generally be able to discern which interface was responsible for any change in refractive index detected. Thus independent sensing via the two sensing layers would not be possible but such a sensor would double the sensing area without increasing surface area size required and thus could provide increased sensitivity.

## Claims

**1.** A surface wave sensor apparatus comprising:
at least one layer of a metallic or lossy dielectric material configured to support
surface waves; and
a first sensing layer adjacent a first surface of said at least one layer of metallic or
lossy dielectric material, the sensing layer being sensitive to one or more target chemicals so as to undergo a change in physical properties in the presence of said one or more target chemicals,
wherein:
the apparatus comprises at least one sensing layer adjacent a different surface of
said at least one layer of metallic or lossy dielectric material wherein said sensing layers and said at least one layer of metallic or lossy dielectric material are arranged in a multilayer stack in a direction substantially perpendicular to said layers.

**2.** A surface wave sensor apparatus as claimed in claim 1 wherein the first sensing layer is adjacent one surface of a first layer of metallic or lossy dielectric material and an additional layer of sensing material is adjacent the opposite surface of the first layer of metallic or lossy dielectric material.

**3.** A surface wave sensor apparatus as claimed in claim 1 or claim 2 wherein said multilayer stack comprises a plurality of layers of metallic or lossy dielectric material configured to support surface modes.

**4.** A surface wave sensor apparatus as claimed in claim 3 or claim 4 wherein the multilayer stack comprises at least one layer of porous material between layers of metallic or lossy dielectric material.

**5.** A surface wave sensor apparatus as claimed in any of claims 3 or 4 wherein said multilayer stack is configured such that, in use, the plurality of layers of metallic or lossy dielectric material are separated by layers of liquid.

**6.** A surface wave sensor apparatus as claimed in any of claims 3 to 5 wherein the first sensing layer is adjacent one surface of a first layer of metallic or lossy dielectric material and an additional layer of sensing material is adjacent one surface of a second layer of metallic or lossy dielectric material.

**7.** A surface wave sensor apparatus as claimed in any of claims 3 to 6 wherein at least two layers of metallic or lossy dielectric material have sensing layers adjacent both their top and bottom surfaces in the multilayer stack.

**8.** A surface wave sensor apparatus as claimed in any preceding claim wherein at least some of the sensing layers are sensitive to different target chemicals.

**9.** A surface wave sensor apparatus as claimed in any preceding claim wherein at least some of the sensing layers are sensitive to the same target chemicals.

**11.** A surface wave sensor apparatus as claimed in any preceding claim further comprising an optical coupler for coupling light incident on the multilayer stack into surface modes in the at least one layer of metallic or lossy dielectric material.

**12.** A surface wave sensor apparatus as claimed in claim 11 wherein said optical coupler comprises a refractive element or a diffractive element.

**13.** A method of chemical sensing comprising:
taking a multilayer stack comprising, in a direction perpendicular to said stack, at
least one layer of metallic or lossy dielectric material, a first sensing layer adjacent a first surface of a layer of metallic or lossy dielectric material and at least one additional sensing layer adjacent a different surface of a layer of metallic or lossy dielectric material,
illuminating said multilayer stack with light to induce surface waves in said at
least one layer of metallic or lossy dielectric material; and
monitoring light reflected from said multilayer stack to detect the presence of said
target chemicals.

**14.** A method as claimed in claim 13 wherein the multilayer stack comprises at least two layers of metallic or lossy dielectric material and the method comprises monitoring the surface wave resonance for each of said at least two metallic or lossy dielectric layers to detect any variation.

**15.** A method as claimed in claim 14 comprising analysing any variation in surface wave resonance for each of said at least two metallic or lossy dielectric layers to identify which sensing layer is causing said variation.
